# EUROPEAN PATENT APPLICATION

(11) **EP 2 012 512 A2**
(43) Date of publication of application: **07.01.2009**
(21) Application number: 08159482.2
(22) Date of filing: 02.07.2008
(51) Int. Cl.: H04M 1/73, H04M 1/725

(54) **Apparatus and method for using alarm function in portable terminal**

(30) Priority: 05.07.2007 KR 20070067490
(71) Applicant: Samsung Electronics Co., Ltd., Suwon-si, Gyeonggi-Do (KR)
(72) Inventor: Lee, Seung-Jun, Suwon-si, Gyeonggi-do (KR); Cha, Tae-Kwan, Suwon-si, Gyeonggi-do (KR)
(74) Representative: Boakes, Jason Carrington

(57) **Abstract**

An apparatus and method for using an alarm function in a portable terminal is provided. In the method, a residual battery voltage of the portable terminal is checked, the portable terminal is turned off when the residual battery voltage becomes identical to a threshold voltage, and the portable terminal is turned on to generate an alarm when the present time becomes identical to a preset alarm time.

## Description

### BACKGROUND OF THE INVENTION

### 1. Field of the Invention:

The present invention relates to an apparatus and method for using an alarm function in a portable terminal. More particularly, the present invention relates to an apparatus and method for using an alarm function of a portable terminal even in a turn-off mode of the portable terminal.

### 2. Description of the Related Art:

Currently, portable terminals are becoming popular with the development of electronics and communications industries. In order to meet users' demands, portable terminals have been developed to provide a variety of additional functions in addition to a basic function. The additional functions include a phonebook function, a game function, a scheduler function, a short message function, an Internet function, an e-mail function, a morning call function, an alarm function, a file viewer function, an automatic response function, a camera function and the like.

In particular, the morning call/alarm function is used to inform users of times (e.g., wake-up times and appointed times) or dates set by the users.

However, the morning call/alarm function may be disabled when the portable terminal is turned off. Because the portable terminal is limited in battery capacity, the battery of the portable terminal must be charged periodically so that the portable terminal can maintain a turn-on state. When a user of the portable terminal fails to charge the battery of the portable terminal in a timely manner and thus the portable terminal is turned off, the user cannot use the morning call/alarm function of the portable terminal.

Therefore, a need exists for an improved apparatus and method for using an alarm function of a portable terminal even in a turn-off mode.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for using an alarm function in a portable terminal.

Another aspect of the present invention is to provide an apparatus and method for using an alarm function of a portable terminal even in a turn-off mode, by managing the power of the portable terminal depending on a battery voltage of the portable terminal.

According to one aspect of the present invention, a method for using an alarm function in a portable terminal is provided. The method includes detecting a residual battery voltage of the portable terminal, turning off the portable terminal when the residual battery voltage becomes identical to a threshold voltage, and turning on the portable terminal to generate an alarm when the present time becomes identical to a preset alarm time.

According to another aspect of the present invention, an apparatus for using an alarm function in a portable terminal is provided. The apparatus includes a residual battery voltage detector for detecting a residual battery voltage of the portable terminal, a power manager for turning off the portable terminal when the residual battery voltage becomes identical to a threshold voltage, and turning on the portable terminal when the present time becomes identical to a preset alarm time, and an alarm generator for generating an alarm if the portable terminal is turned on when the present time becomes identical to the preset alarm time.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will become more apparent from the following description taken in conjunction with the accompanying drawings in which:

FIG. 1 is a block diagram of an apparatus for using an alarm function by managing the power of a portable terminal according to an exemplary embodiment of the present invention; and

FIG. 2 is a flow diagram illustrating a process for using an alarm function by managing the power of a portable terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The present invention is intended to provide an apparatus and method for using an alarm function of a portable terminal even in a turn-off mode of the portable terminal, by turning off the portable terminal when a residual battery voltage of the portable terminal becomes lower than a threshold voltage.

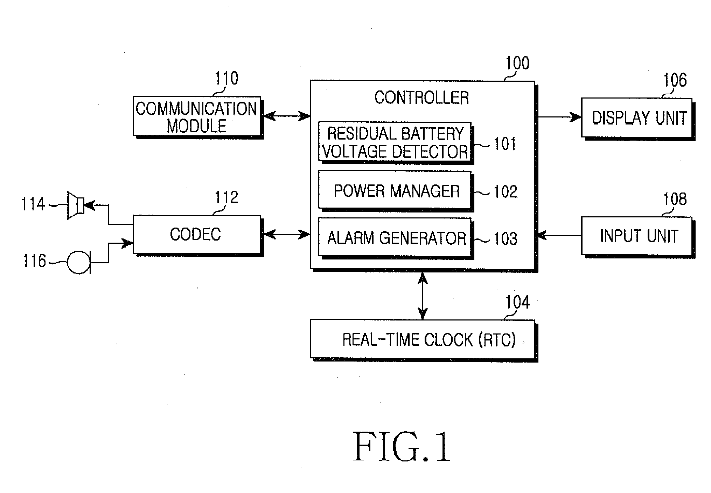

FIG. 1 is a block diagram of an apparatus for using an alarm function by managing the power of a portable terminal according to an exemplary embodiment of the present invention.

Referring to FIG. 1, the portable terminal includes a controller (e.g., a Micro-Processor Unit (MPU)) 100, a residual battery voltage detector 101, a power manager (e.g., a Power Management_Integrated Circuit (PM_IC)) 102, an alarm generator 103, a Real-Time Clock (RTC) 104, a display unit 106, an input unit 108, a communication module 110, a coder-decoder (codec) 112, a speaker 114, and a microphone 116.

The controller 100 controls the overall operations of the portable terminal. According to an exemplary embodiment of the present invention, the controller 100 controls an operation for performing an alarm function by using a residual battery voltage after turning off the portable terminal when a residual battery voltage of the portable terminal becomes lower than a threshold voltage.

Also, the controller 100 controls an operation for detecting the residual battery voltage of the portable terminal by means of the residual battery voltage detector 101 when an alarm power management function is set, and turning off the portable terminal by means of the power manager 102 when the residual battery voltage becomes lower than the threshold voltage.

Also, the controller 100 controls an operation for comparing the set alarm time with the present time provided from the real-time clock 104 in a turn-off state of the portable terminal, for turning on the portable terminal by means of the power manager 102, and for generating an alarm by means of the alarm generator 103 when the present time is identical to the alarm time.

Also, the controller 100 controls an operation for outputting a battery voltage shortage message to the display unit 106 and for turning off the portable terminal by means of the power manager 102 when an alarm termination button is input by means of the input unit 108 after the generated alarm is output through the speaker 114.

The residual battery voltage detector 101 detects a present battery voltage level of the portable terminal and provides the detected present battery voltage level to the controller 100.

The power manager 102 turns on/off the portable terminal under the control of the controller 100 when the detected present battery voltage level is identical to a threshold voltage.

The alarm generator 103 generates an alarm under the control of the controller 100 when the present time is identical to the alarm time.

The real-time clock 104 receives power from an internal power source or a backup battery to generate a clock periodically even in a turn-off state of the portable terminal, thereby retaining and providing the time and date of the portable terminal to the controller 100.

The display unit 106 displays a limited number of characters and state information that are generated during the operation of the portable terminal. The display unit 106 may be implemented using a color Liquid Crystal Display (LCD). According to an exemplary embodiment of the present invention, the display unit 106 displays a battery voltage shortage message under the control of the controller 100.

The input unit 108 includes a plurality of keys for inputting numeric or character data and a plurality of function keys for setting various functions. The input unit 108 provides the controller 100 with key input data corresponding to a key pressed by a user. According to an exemplary embodiment of the present invention, the input unit 108 provides the controller 100 with alarm setting data including voltage management data and input data of the alarm termination button.

The communication module 110 processes Radio Frequency (RF) signals transmitted/received through an antenna (not shown). For example, for a transmission operation, the communication module 110 channel-codes/spreads TX data into a baseband signal and converts the baseband signal into an RF signal. For a reception operation, the communication module 110 converts a received RF signal into a baseband signal and despreads/channel-decodes the baseband signal into original data.

The codec 112 connected to the controller 100, and the speaker 114 and the microphone 116 connected to the codec 112 constitute an audio input/output block that is used for telephone communications and voice recordings. The codec 112 converts Pulse Code Modulation (PCM) data received from the controller 100 into analog audio signals and outputs the analog audio signals to the speaker 114. Also, the codec 112 converts audio signals received from the microphone 116 into PCM data and provides the PCM data to the controller 100. The speaker 114 outputs an alarm under the control of the controller 100 when the present time is identical to the alarm time.

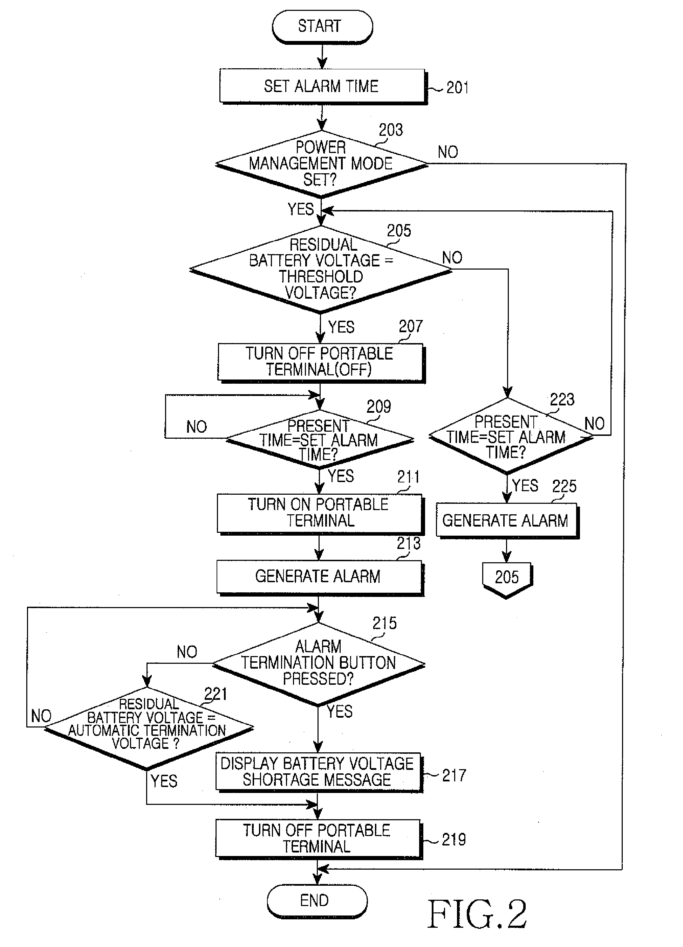

FIG. 2 is a flow diagram illustrating a process for using an alarm function by managing power of a portable terminal according to an exemplary embodiment of the present invention.

Referring to FIG. 2, the user sets an alarm time at the portable terminal in step 201. In step 203, the portable terminal determines whether a power management mode is set by the user.

If the power management mode is not set in step 203, the portable terminal ends the process.

On the other hand, if the power management mode is set in step 203, the process proceeds to step 205. The portable terminal compares a residual battery voltage with a threshold voltage in step 205. If the residual battery voltage is not identical to the threshold voltage in step 205, the process proceeds to step 223. In step 223, the portable terminal determines whether the present time is identical to the set alarm time. If the present time is identical to the set alarm time in step 223, the process proceeds to step 225. In step 225, the portable terminal generates an alarm. Thereafter, the process returns to step 205.

On the other hand, if the residual battery voltage is identical to the threshold voltage in step 205, the process proceeds to step 207. In step 207, the portable terminal is turned off. For example, assuming that the portable terminal is correctly turned off when the residual battery voltage becomes 3.4 V and that a battery voltage of 0.1 V is necessary to turn on the portable terminal and generate an alarm, the power manager 102 turns off the portable terminal when the residual battery voltage becomes 3.5 V.

In step 209, the portable terminal determines whether the present time received through the real-time clock 104 is identical to the set alarm time. If the present time is identical to the set alarm time in step 209, the process proceeds to step 211. In step 211, the portable terminal is turned on. In step 213, the portable terminal generates an alarm.

In step 215, the portable terminal determines whether the alarm termination button is input by the user. If the alarm termination button is input by the user in step 215, the process proceeds to step 217. In step 217, the portable terminal displays a battery voltage shortage message on the display unit 106. In step 219, the portable terminal is turned off. Thereafter, the portable terminal ends the process.

On the other hand, if the alarm termination button is not input by the user in step 215, the process proceeds to step 221. In step 221, the portable terminal determines whether the residual battery voltage becomes identical to an automatic termination voltage. If the residual battery voltage becomes identical to the automatic termination voltage in step 221, the process proceeds to step 219 so that the portable terminal is turned off. That is, the portable terminal is turned off when the residual battery voltage becomes identical to the automatic termination voltage in order to prevent a malfunction of the portable terminal. In contrast, if the residual battery voltage is not identical to the automatic termination voltage in step 221, the process proceeds to step 215.

Thereafter, the portable terminal ends the process after either step 217 or step 221.

As described above, an exemplary embodiment of the present invention turns off the portable terminal while leaving the residual battery voltage capable of generating an alarm, by managing the power of the portable terminal depending on the battery voltage of the portable terminal. Thus, the present invention can generate the alarm even in a turn-off mode of the portable terminal by turning on the portable terminal at a set alarm time.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for using an alarm function in a portable terminal, the method comprising:
checking a residual battery voltage of the portable terminal;
turning off the portable terminal when the residual battery voltage becomes identical to a threshold voltage; and
turning on the portable terminal to generate an alarm when the present time becomes identical to a preset alarm time.

2. The method of claim 1, wherein the threshold voltage is set to be able to turn on the portable terminal to generate the alarm.

3. The method of claim 1, wherein the alarm time is the time when time data retained by a real-time clock (104) in a turn-off state of the portable terminal becomes identical to an alarm time set by a user.

4. The method of claim 3, wherein the real-time clock receives power from at least one of an internal power source and a backup battery to generate a clock periodically even in a turn-off state of the portable terminal, thereby retaining and providing the time and date of the portable terminal.

5. The method of claim 1, further comprising turning off the portable terminal if an alarm termination button is input after the alarm is generated.

6. The method of claim 5, further comprising, if the alarm termination button is not input, turning off the portable terminal after generating the alarm until a normal termination voltage.

7. The method of claim 5, further comprising displaying a battery voltage shortage message when the alarm termination button is input.

8. The method of claim 1, further comprising setting a power management mode before the checking of the residual battery voltage.

9. An apparatus for using an alarm function in a portable terminal, the apparatus comprising:
a residual battery voltage detector (101) for checking a residual battery voltage of the portable terminal;
a power manager (102) for turning off the portable terminal when the residual battery voltage becomes identical to a threshold voltage, and for turning on the portable terminal when the present time becomes identical to a preset alarm time; and
an alarm generator (103) for generating an alarm if the portable terminal is turned on when the present time becomes identical to the preset alarm time.

10. The apparatus of claim 9, further comprising:
a real-time clock (104) for providing time data when the portable terminal is turned off; and
a speaker (114) for outputting the alarm generated by the alarm generator (103).

11. The apparatus of claim 9, wherein the threshold voltage is set to be able to turn on the portable terminal to generate the alarm.

12. The apparatus of claim 9, wherein the alarm time is the time when time data retained by a real-time clock (104) in a turn-off state of the portable terminal becomes identical to an alarm time set by a user.

13. The apparatus of claim 9, further comprising an input unit (108) for inputting an alarm termination button when the alarm is generated, wherein the power manager (102) turns off the portable terminal if the alarm termination button is input through the input unit (108).

14. The apparatus of claim 13, wherein if the alarm termination button is not input, the power manager (102) turns off the portable terminal when detecting a normal termination voltage.

15. The apparatus of claim 14, further comprising a display unit (106) for displaying a battery voltage shortage message when the alarm termination button is input through the input unit (108).
